# EUROPEAN PATENT SPECIFICATION

(11) **EP 3 435 237 B1**
(45) Date of publication and mention of the grant of the patent: **31.08.2022**
(21) Application number: 17769733.1
(22) Date of filing: 17.02.2017
(51) Int. Cl.: G06F 12/00, G06K 19/07, H04L 9/14, G06F 21/62, G06F 21/76, G06F 21/77, G06Q 20/34, G07F 7/08, G07F 7/10

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 23.03.2016 JP 2016059082
(43) Date of publication of application: 30.01.2019
(73) Proprietor: Sony Group Corporation, Tokyo 108-0075 (JP)
(72) Inventor: KURITA, Taro, Tokyo 108-0075 (JP); NAKATSURU, Tsutomu, Tokyo 108-0075 (JP); YONEDA, Yoshihiro, Tokyo 108-0075 (JP); SHIBAMOTO, Goro, Tokyo 108-0075 (JP)
(74) Representative: Witte, Weller & Partner Patentanwälte mbB
(86) International application number: PCT/JP2017/005809
(87) International publication number: WO 2017/163686

(56) References cited:
- EP-A1- 1 764 699
- FR-A1- 2 765 362
- JP-A- 2000 503 157
- JP-A- 2003 016 403
- JP-A- 2010 176 352
- US-A1- 2009 307 491

## Description

### Technical Field

The present disclosure relates to an information processing device and an information processing method.

### Background Art

FR 2 765 362 A1 discloses a security module co-operating with a data processing device and comprising data processing means and data storage means, the latter storing several files, wherein the security module comprises: link-generating means arranged for generating a link at least between a main file and an auxiliary file, the main file having predetermined contents and being made accessible to the processing means in the storage means by means of location data, the link-generating means associating the auxiliary file with said location data; and branch means arranged to provide the processing means, when the latter execute an access request for accessing the auxiliary file, with said main file contents using said location data.

EP 1 764 699 A1 discloses an information management apparatus, comprising: a communication section for transmitting/receiving data through a wireless or wired transmission path; data processing section for processing the data transmitted/received by the communication section; a memory space in which a file processed by the data processing section is arranged; and archive-file creating means for creating an archive file for at least one file to be backed up, identification information of a destination at which the archive file is to be decompressed being attached to the archive file.

US 2009/307491 A1 discloses an information processing device, comprising: a data storage portion for storing user data used in a particular service using non-contact communication and management information and that has at least a first storage area storing first management information corresponding to a first encryption method; an issuing information receiver that receives issuing information that is encrypted using the first encryption method from an issuing device that delivers the issuing information to issue second management information corresponding to a second encryption method; an issuing information decryption portion that decrypts the received issuing information with the first encryption method; and a management information issuing portion that, based on the decrypted issuing information, issues the second management information corresponding to the second encryption method and stores the second management information in a second storage area in the data storage portion.

In accordance with distribution of integrated circuit (IC) cards in recent years, movement to use a plurality of services using an IC card has become widespread, and thus many technologies related thereto have been disclosed. For example, Patent Literature 1 discloses a technology in which a terminal (a reader/writer, etc.) or a server appropriately controls a plurality of applications in a case in which the plurality of applications are processed in an IC card.

### Citation List

### Patent Literature

Patent Literature 1: JP 2007-279966A

### Disclosure of Invention

### Technical Problem

However, in a case in which an information processing device such as an IC card supports more services, the amount of processing by a terminal (a reader/writer, etc.) or a server increases, and thus there is a problem of an increasing load imposed on the terminal or the server. Thus, such information processing devices like IC cards need to deal with a greater amount of processing.

Therefore, the present disclosure takes the above-described problem into consideration and aims to provide a novel and improved information processing device capable of linking data and processes concerning a plurality of services.

### Solution to Problem

The invention is defined in the independent claims 1 and 11. According to the present disclosure, there is provided an information processing device as defined in the independent device claim 1, and an information processing method as defined in the independent method claim 11.

In certain embodiments, there is provided an information processing device including: a processing unit configured to process data concerning services associated in a storage medium, the data corresponding to each of a plurality of services.

### Advantageous Effects of Invention

According to the present disclosure described above, it is possible to link data and processes concerning a plurality of services.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating an example of an information processing system according to the present embodiment.
[FIG. 2] FIG. 2 is an explanatory diagram illustrating a configuration of an IC card according to the present embodiment.
[FIG. 3] FIG. 3 is an explanatory diagram illustrating a hierarchical structure of data and the like included in the IC card.
[FIG. 4] FIG. 4 is an explanatory diagram illustrating a processing flow for associating data according to the present embodiment.
[FIG. 5] FIG. 5 is an explanatory diagram illustrating a processing flow for setting a program according to the present embodiment.
[FIG. 6] FIG. 6 is an explanatory diagram illustrating an operation of an IC card and a reader/writer according to the present embodiment.
[FIG. 7] FIG. 7 is an explanatory diagram illustrating a setting pattern of associated data and the program according to the present embodiment.
[FIG. 8] FIG. 8 is an explanatory diagram illustrating a configuration of logical cards according to the present embodiment.
[FIG. 9] FIG. 9 is an explanatory diagram illustrating a hierarchical structure of data and the like stored in a storage area according to the present embodiment.
[FIG. 10] FIG. 10 is an explanatory diagram illustrating association of storage areas according to the present embodiment.
[FIG. 11] FIG. 11 is an explanatory diagram illustrating a hardware configuration of an IC card according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
<1. First example>
1-1. Overview of information processing system
1-2. Configuration of IC card 100
1-3. Association of data in IC card 100
1-4. Setting of program in IC card 100
1-5. Operation of IC card 100 and reader/writer 200
<2. Second example>
<3. Hardware configuration example of information processing device>

### <1. First example>

### [1-1. Overview of information processing system]

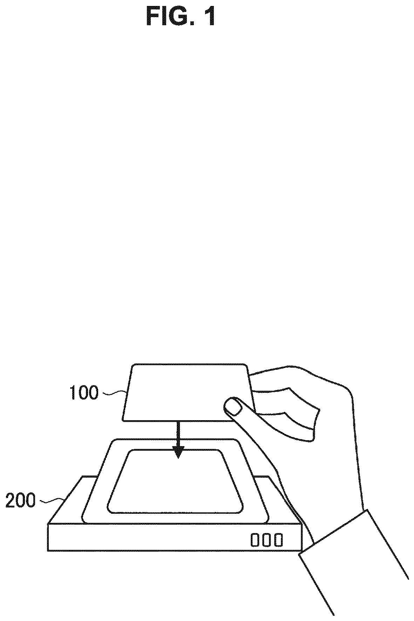

First, an overview of an information processing system according to an embodiment of the present disclosure will be described with reference to FIG. 1. FIG. 1 is an explanatory diagram illustrating an example of the information processing system according to the present embodiment. As illustrated in FIG. 1, the information processing system according to the present embodiment includes an IC card 100 and a reader/writer 200, and the IC card 100 and the reader/writer 200 are connected via a communication path 300. The IC card 100 according to the present embodiment is a non-contact-type IC card used in near field wireless communication (NFC).

Non-contact-type IC cards are information processing devices that have been distributed recently to be used in electronic money systems, security systems, and the like. IC cards are broadly divided into contact-type IC cards and non-contact-type IC cards. Contact-type IC cards are a type of IC card that communicates with a reader/writer via a module terminals when the module terminal is brought in contact with the reader/writer. On the other hand, non-contact type IC cards are a type of IC card that has a wireless communication module and performs wireless communication with a reader/writer. Non-contact type IC cards are highly convenient because it is not necessary for users to take the IC cards out of their wallets, card cases, and the like when they use the IC cards, and thus cases in which IC cards are used for payment for transportation facilities, retail stores, and the like have been increasing.

Although the IC card 100 according to the embodiment of the present disclosure is assumed to be a non-contact-type IC card as an example, it is not limited to a non-contact-type IC. Specifically, the IC card 100 according to the embodiment of the present disclosure may be embodied by an information processing device, for example, any of contact-type IC cards, various communication devices in which IC cards are built (mobile telephones, wrist watches, personal digital assistants (PDAs), portable game machines, portable video/audio players, and the like), various servers, and the like. That is, the embodiment of the present disclosure is not limited by the form of the card.

In addition, a plurality of services can be applied to one IC card 100. Specifically, one IC card 100 can support a plurality of services such as ticket selling services provided by transportation facilities, product selling services provided by retailers, authentication services provided by financial institutions, and the like. In this case, users do not have to carry dedicated IC cards to use each of the services, and thus can more easily manage their IC cards.

The reader/writer 200 is an information processing device that performs reading, writing, and the like of data of the IC card 100 by performing non-contact communication with the IC card 100 when the IC card 100 is held by a user. In addition, the IC card 100 may perform reading and writing of data of the reader/writer 200. When the reader/writer 200 and the IC card 100 perform non-contact communication with each other, the user using the IC card 100 can enjoy various services.

The reader/writer 200 according to the embodiment of the present disclosure is merely an example, and the embodiment of the present disclosure is not limited to the reader/writer 200. Specifically, the reader/writer 200 according to the embodiment of the present disclosure may be embodied by an information processing device, for example, any of automatic ticket checkers of transportation facilities, register machines of retail stores, vending machines of various products, automated/automatic teller machines (ATMs) of financial institutions, various servers, and the like.

The communication path 300 is a transmission path for near field wireless communication (NFC). In a case in which the IC card 100 and the reader/writer 200 are replaced with information processing devices such as various servers, the communication path 300 may include a short-range wireless communication network such as a public wireless local area network (LAN), Bluetooth (registered trademark), and infrared communication, a public network such as the Internet, a telephone network, and a satellite communication network, various LANs including Ethernet (registered trademark) and a wide area network (WAN), and the like. In addition, the communication path 300 may also include a dedicated network such as an Internet Protocol-Virtual Private Network (IP-VPN), and the like.

### [1-2. Configuration of IC card 100]

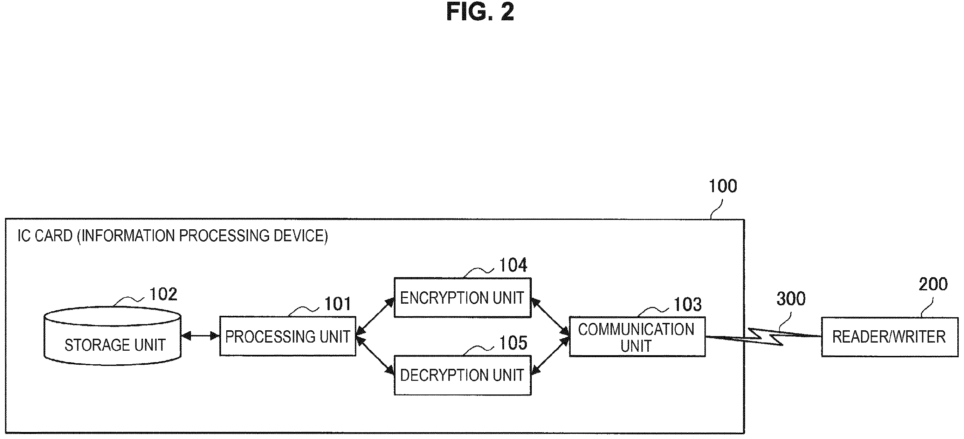

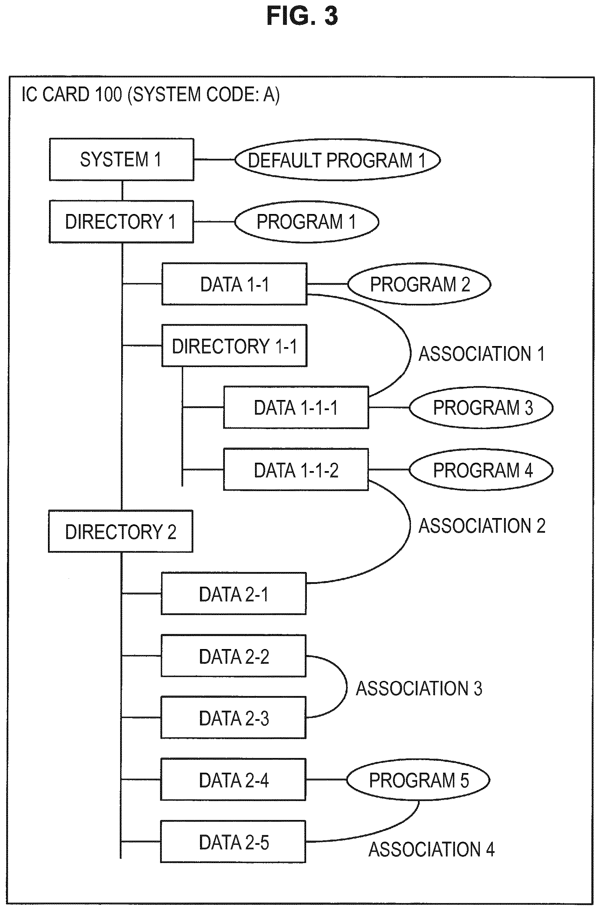

The overview of the information processing system according to the present embodiment has been described above. Next, a configuration of the IC card 100 will be described using FIGS. 2 and 3. FIG. 2 is an explanatory diagram illustrating a configuration of the IC card 100 according to the present embodiment, and FIG. 3 is an explanatory diagram illustrating a hierarchical structure of data and the like included in the IC card 100. As illustrated in FIG. 2, the IC card 100 includes a processing unit 101, a storage unit 102, a communication unit 103, an encryption unit 104, and a decryption unit 105.

First, the communication unit 103 is an interface for the reader/writer 200, and receives various requests such as a polling (polling) request from the reader/writer 200, an authentication message request, and a data reading/writing request. In addition, the communication unit 103 transmits various replies such as a polling reply, an authentication message reply, and a data reading/writing reply in response to the various requests. In addition, although not illustrated, the communication unit 103 is constituted by, for example, a modulation/demodulation circuit, a front-end circuit, a power supply regeneration circuit, and the like.

The modulation/demodulation circuit modulates and demodulates data in, for example, an amplitude shift keying (ASK) modulation scheme, or the like. The power supply regeneration circuit generates electric power using electromagnetic induction from a radio frequency (RF) operating magnetic field of carrier waves received from the reader/writer 200 using an antenna unit (not illustrated) and takes the electric power as an electromotive force of the IC card 100. In addition, the front-end circuit receives carrier waves received by the reader/writer 200 using the antenna unit, demodulates the carrier waves, then acquires a command or data from the reader/writer 200, and supplies the command or data to the processing unit 101 via the decryption unit. Furthermore, the front-end circuit modulates the carrier waves in accordance with a command or data generated by the processing unit 101 concerning a predetermined service and transmits the carrier waves from the antenna unit to the reader/writer 200.

The encryption unit 104 and the decryption unit 105 can be configured by hardware such as an encryption co-processor (co-processor) having an encryption processing function. The encryption unit 104 and the decryption unit 105 according to the present embodiment are configured by co-processors that support a plurality of encryption algorithms, for example, Data Encryption Standard (DES), Advanced Encryption Standard (AES), and the like. By having such co-processors mounted therein, the IC card 100 can perform wireless communication with the reader/writer 200 using the plurality of encryption algorithms.

The processing unit 101 controls the storage unit 102, the communication unit 103, the encryption unit 104, and the decryption unit 105, and executes a predetermined arithmetic process and program, and the like. For example, when communicating with the reader/writer 200 for a predetermined service, the processing unit 101 processes data concerning the service stored by the storage unit 102 or processes the data by executing the program.

The storage unit 102 stores data and the like concerning the plurality of services supported by the IC card 100. Specifically, the storage unit 102 stores hierarchically structured systems, directories, data, and the like as illustrated in FIG. 3. Here, a system is a concept encompassing an entire hierarchical structure, and there is one system in one hierarchical structure. Next, a directory is also referred to as an "area," and is a concept encompassing data under its control, and there are a plurality of directories in one hierarchical structure. A directory can be placed under a system or another directory. Finally, data refers to a concept that includes information necessary for providing various services, and there can be a plurality of pieces of data in one hierarchical structure. Data can be placed under a system or a directory.

In a case in which the IC card 100 supports a plurality of services, data concerning one service may be included under one directory, or may be included under a plurality of directories in a divided manner. In addition, one service may be composed of one piece of data or a plurality of pieces of data.

In a hierarchical structure stored by the storage unit 102, various settings for a system and a higher directory can affect directories and data placed under the aforementioned system and directory. The various settings mentioned here include, for example, an authentication key, an authentication way, and an access right with respect to the system, directory, and data, and the like.

A setting of the access right with respect to a directory placed in an upper order can be, for example, a default setting of the access right with respect to another directory and data placed under the aforementioned directory. That is, in a case in which the access right with respect to the other directory and data is not separately set, the setting of the access right to the higher-order directory can be passed on. With this function, it is not necessary to make various individual settings for directories and data, and thus a management load with respect to the directories and data can be reduced.

In addition, the storage unit 102 can store data concerning each of the plurality of services by associating data of different services. Methods of associating data include association through linking ("association" referred to below means association through linking) and association through a program.

Specifically, the processing unit 101 can associate pieces of data present under different directories like association 1 and association 2 illustrated FIG. 3, or can associate pieces of data present under the same directory like association 3. This association is association through linking. On the other hand, the processing unit 101 can associate pieces of data using a program set for the data like association 4. This association is the association through a program.

Although not illustrated, data association may be made between three or more pieces of data (or services). Note that the storage unit 102 is assumed to be a storage medium provided in the IC card 100. Details with regard to association of data will be described in "1-3. Association of data in IC card 100."

Furthermore, in a state in which programs for the system, directories, or data are set, the storage unit 102 can store the programs. Specifically, it is possible to set a default program for the system 1, a program 1 for a directory 1, a program 2 for data 1-1, and the like as illustrated in FIG. 3. In addition, by setting a program for a plurality of pieces of data like a program 5, the above-described association of data can be made. Here, the default program is a program set in units of systems, and is a program that performs processing on directories, data, and programs placed under the system. However, the default program may operate as a single default program without processing data or the like.

In addition, although a program set for a directory and data performs a process on a directory, data, and a program placed under the aforementioned directory and data, the program may operate as a single program similarly to the default program.

In the hierarchical structure stored by the storage unit 102, various settings of the access right to the system, directories or data, and the like can affect programs set thereunder. For example, a setting of the access right to a directory present in a higher order can be set as a default setting of the access right to a program set under the directory. That is, in a case in which the access right to the program is not separately set, the setting of the access right to the higher-order directory can be passed on. With this function, it is not necessary to make various individual settings for the program, and thus a management load can be reduced. Details on the setting of the program will be described in "1-4. Setting of program in IC card 100."

### [1-3. Association of data in IC card 100]

The configuration of the IC card 100 has been described above. As illustrated in FIG. 3, the storage unit 102 can store data concerning each of the plurality of services by associating data of different services.

As an example, it is assumed that the data A concerning a service A is associated with the data B concerning a service B. Then, in a case in which a process concerning the service A is performed, the processing unit 101 of the IC card 100 can perform the process not only on the data A but also on the data B. Likewise, in a case in which a process concerning the service B is performed, the processing unit 101 of the IC card 100 can perform the process not only on the data B but also on the data A.

Here, the processing unit 101 of the IC card 100 can flexibly set an access right in a case in which a process is performed on the data A and the data B. In a case in which a process for the service A is performed, for example, "readable/writable," "readable/writable (e.g., predetermined arithmetic operations only)," "readable" and the like can be set as access rights with respect to the data A. On the other hand, "readable/writable," "readable/writable (e.g., predetermined arithmetic operations only)," "readable" and the like can also be set as access rights with respect to the data B. At this time, the access rights set with respect to the data A and the data B may be different.

In addition, a program can be set for data as illustrated in FIG. 3. In this case, an access right with respect to the program can be flexibly set as well. For example, it is assumed that a program A is set for the data A and a program B is set for the data B. Then, in a case in which a process for the service A is performed, the processing unit 101 can set whether both the program A and the program B are executable, whether either the program A or the program B is executable, or the like.

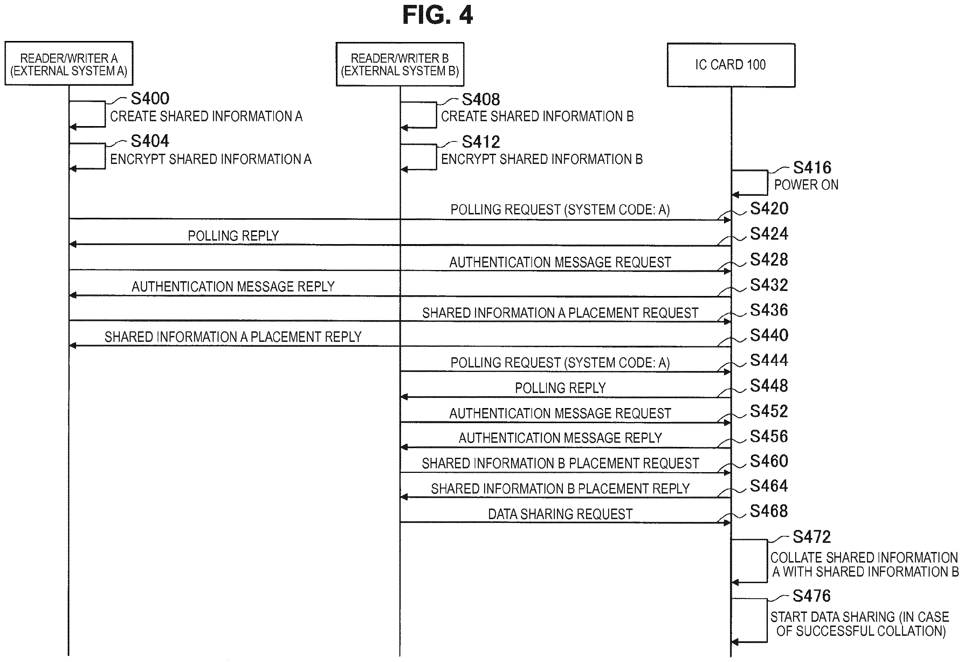

Next, a process flow for associating data of a plurality of services will be described with reference to FIG. 4. FIG. 4 illustrates a processing flow for associating the data A for the service A with the data B for the service B. Here, it is assumed that a reader/writer A of FIG. 4 is a reader/writer that supports the service A, and a reader/writer B is a reader/writer that supports the service B. In addition, the reader/writers are merely examples, and subjects of the processing flow are not necessarily limited to the reader/writer A and the reader/writer B. Specifically, the subjects of the processing flow can be replaced by various servers and the like having equivalent functions to those of the reader/writer A and reader/writer B, such as an external system A and an external system B. In addition, the reader/writer A and the reader/writer B may be integrated.

First, the reader/writer A creates shared information A (S400) and encrypts the shared information with a predetermined algorithm (S404). In addition, a data sharer B creates shared information B (S408) and encrypts the shared information (S412).

Here, the shared information is various kinds of information necessary for associating data, and the shared information includes information regarding a setting of access rights to services. Specifically, the shared information A includes setting information of an access right to the data A and the data B, and the shared information B also includes setting information of an access right to the data A and the data B. The processing unit 101 associates the data A with the data B by collating the shared information A with the shared information B. In a case in which content of the shared information A matches that of the shared information B, for example, the processing unit 101 determines that the service A and the service B agree with each other and associates the data A with the data B. Note that it is not necessary for the shared information A to match the shared information B in order to make the association.

In addition, the shared information can include information regarding access rights with respect to the program A and the program B. By collating information regarding access rights included in the shared information A and the shared information B with each other, the processing unit 101 determines whether the program A and the program B are to be shared for both services. In addition, the shared information can include hash values of the programs. In this case, if the hash values included in the shared information A and the shared information B match each other when the processing unit 101 collates the shared information A with the shared information B, the program A and the program B can be shared for both services.

Next, when a user brings the IC card 100 in proximity to the reader/writer A, the IC card 100 passes through a carrier wave emitted from the reader/writer A. Then, the power supply regeneration circuit included in the communication unit 103 of the IC card 100 generates electric power. Then, the IC card 100 is activated using the electric power as an electromotive force (S416).

Next, the reader/writer A transmits a polling request to IC card 100 (S420). Specifically, the reader/writer 200 may keep transmitting polling requests before the IC card 100 comes in proximity at all times.

The polling request includes identification information for specifying the type of IC card 100. Note that the identification information may be any form of identification information as long as the type of IC card 100 can be specified therewith, and a system code, an ID, or the like is possible. In the present embodiment, a system code will be described as the identification information. Specifically, by performing polling to designate the type of IC card desired to be processed using the system code, the reader/writer 200 can cause only the type of desired IC card to respond and can allow a polling reply. That is, IC cards other than the desired IC card do not transmit polling replies even if the IC cards receive the polling because system codes included in the polling are different. Then, for example, when a user brings a plurality of types of IC cards in proximity to the reader/writer 200 with the IC cards overlapped, only a desired IC card can be processed. In the present example, the IC card 100 is assumed to hold a system code A.

The IC card 100 that has received the polling request transmits a polling reply to the reader/writer A (S424). Upon receiving the polling reply, the reader/writer A creates an authentication message request and transmits the authentication message request to the IC card 100 (S428). Upon receiving the authentication message request from the reader/writer A, the IC card 100 creates an authentication message reply and transmits the authentication message reply to the reader/writer A (S432). Through this process, mutual authentication between the IC card 100 and the reader/writer A is completed. After the mutual authentication is completed, the reader/writer A transmits a shared information A placement request to the IC card 100 (S436), and the IC card 100 causes the storage unit 102 to store the shared information A in response to the request. Then, the IC card 100 transmits a shared information A placement reply to the reader/writer A (S440).

The reader/writer B causes the storage unit 102 of the IC card 100 to store the shared information B through the processes from S444 to S464. Since the processing details are similar to those of the above-described processes (S420 to S440) of the reader/writer A, description thereof will be omitted.

Next, either the reader/writer A or the reader/writer B makes a data sharing request. For example, the reader/writer B that supports the service B makes a sharing request of the data A concerning the service A with respect to the IC card 100 as illustrated in FIG. 4 (S468). Then, the processing unit 101 of the IC card 100 collates the shared information A with the shared information B (S472). Then, if the collation succeeds, the data A concerning the service A is associated with the data B concerning the service B (S476). On the other hand, in a case in which the collation does not succeed, data association will not be performed.

Although the association of the data of the service A and the service B has been described, data concerning three or more services may be associated. Furthermore, a plurality of pieces of data concerning the same service may also be associated.

In addition, the process flow described using FIG. 4 for associating pieces of data is assumed to be performed when a user brings the IC card 100 in proximity to the reader/writers. However, association of pieces of data is not limited to the method described in FIG. 4, and is possible in a state in which the IC card 100 can communicate with an external system. Of course, it is also possible to perform association of pieces of data at the time of manufacturing of the IC card 100.

### [1-4. Setting of program in IC card 100]

The association of pieces of data stored by the storage unit 102 has been described above. Next, a function of setting a program for a system, a directory, or data will be described.

As described using FIG. 3, the storage unit 102 can store programs in a state in which the programs are set for a system, a directory, or data. In this case, for example, by executing the program set for the data, the processing unit 101 can perform a process on the data. With this function, it is possible to flexibly set a target to be processed in the program, and therefore, it is possible to provide services or operate the IC card more flexibly in comparison to conventional IC cards. For example, because authentication methods are uniformly decided with respect to conventional IC cards, it was difficult to change or revise authentication methods for some services. On the other hand, in the present embodiment, programs performed for authentication can be changed in units of systems, directories, or data. In this case, an authentication method supported by each service can be selected. Furthermore, different authentication methods can be selected for each of services or authentication methods can be individually changed. Of course, the same authentication method may be selected for each of services.

In addition, in a case in which pieces of data concerning different services are associated and a process is performed on the data of both services in the related art, it is necessary to share key information between the services. On the other hand, in the present embodiment, it is possible to set a program including key information for data of each of services with respect to associated data of different services. At this time, the content of the key information can be set not to be decoded by encrypting the key information for the data of both services included in the program. If the processing unit 101 executes the program including the key information, the processing unit 101 can perform a process on the data of both services. That is, the process can be performed on the associated data of the services without details of the key information informed by each service provider. Of course, encryption of the key information is unnecessary, and may be set in the program in a state in which the key information is disclosed for the services. Here, the key information may be any information as long as it can realize authentication.

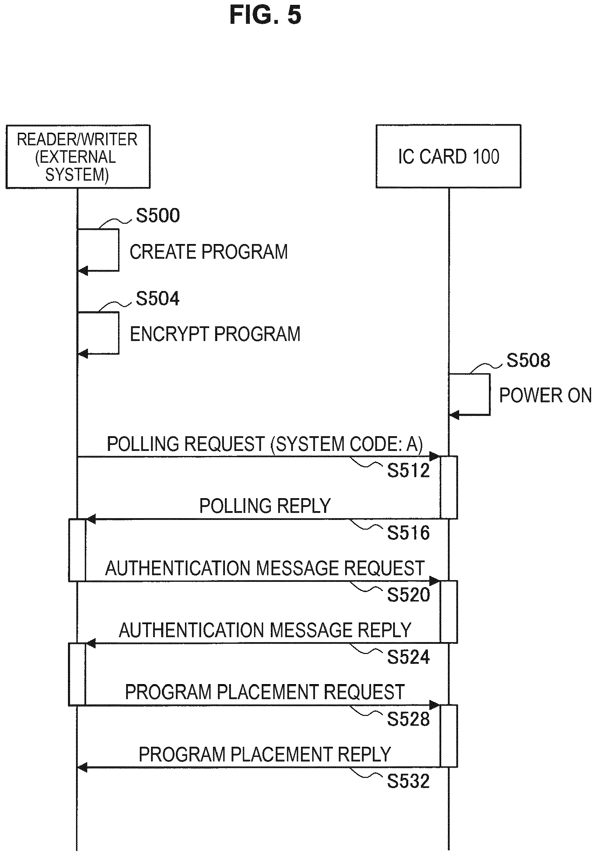

Thus, a method of setting a program for a system, a directory, or data will be described next with reference to FIG. 5. Note that a reader/writer illustrated in FIG. 5 is merely an example, and the subject of the processing flow is not necessarily limited to a reader/writer. Specifically, the subject of the processing flow can be replaced by any of various servers or the like such as an external system having a function equivalent to that of a reader/writer.

FIG. 5 is an explanatory diagram illustrating a flow for setting a program according to the present embodiment. The reader/writer creates a program (S500) and encrypts the program using a predetermined algorithm (S504). The encrypted program is set to the IC card 100 after passing through the steps from S508 to S524. Here, since the details of the processes from S508 to S524 are similar to those of the above-described processes from S416 to S432, description thereof will be omitted.

Next, a program placement request is transmitted from the reader/writer to the IC card 100 (S528), and upon receiving the program placement request, the IC card 100 causes the storage unit 102 to store the encrypted program. Then, the IC card 100 transmits a program placement reply to the external system (S532), and thereby completes the placement of the program.

The process flow for placing the program described in FIG. 5 is assumed to be performed when a user brings the IC card 100 in proximity to the reader/writer 200. However, a program placement method is not limited to the method described in FIG. 5 and a method thereof is possible as long as the IC card 100 can communicate with an external system. Of course, the program can be placed at the time of manufacturing of the IC card 100.

### [1-5. Operation of IC card 100 and reader/writer 200]

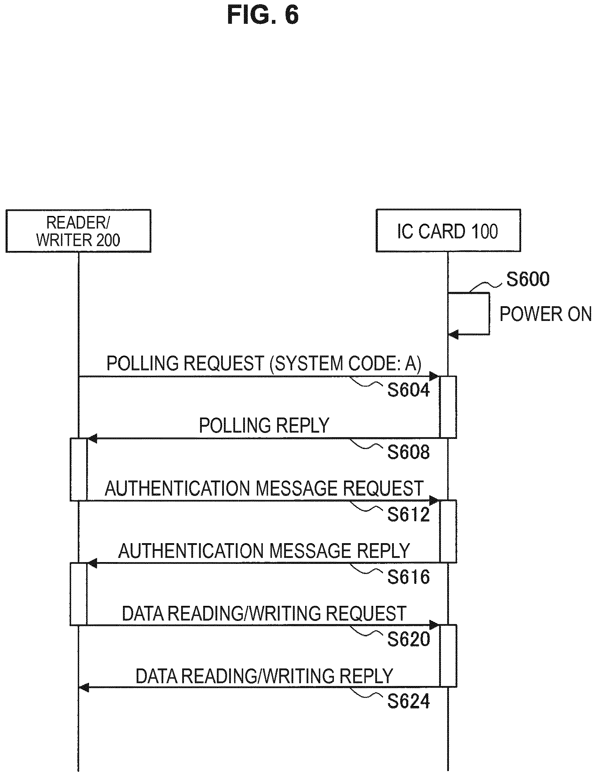

The method for setting a program for a system, a directory, or data has been described above. Next, an operation of the IC card 100 and the reader/writer 200 according to the present embodiment will be described using FIG. 6.

Here, details of the processes from S600 to S616 of FIG. 6 are similar to those of the above-described processes from S416 to S432 of FIG. 4, and thus description thereof will be omitted. After mutual authentication is completed by performing S616, the reader/writer 200 can transmit a data reading/writing request to the IC card 100 (S620), and the IC card 100 can perform a process in response to the request. Furthermore, the IC card 100 transmits a data reading/writing reply to the reader/writer 200 as a result of the execution of the process in response to the request (S624).

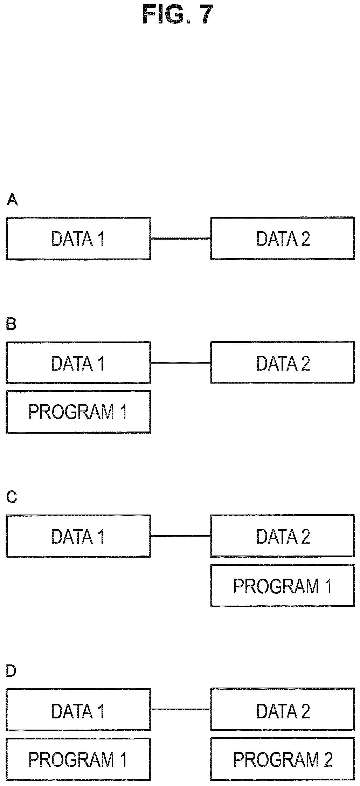

Next, a process performed by the processing unit 101 of the IC card 100 in accordance with the data reading/writing request (S620) from the reader/writer 200 will be described in detail with reference to FIGS. 3 and 7.

As described using FIG. 3, the storage unit 102 can store data concerning each of the plurality of different services in a state in which the data of the different services are associated. With the association, the processing unit 101 of the IC card can perform a process on data concerning one service as well as data concerning the other services associated with the aforementioned data. For example, when a process on data 1-1 described in FIG. 3 is performed, the processing unit 101 recognizes that the data 1-1 is associated with data 1-1-1 by association 1. In this case, the processing unit 101 can perform the process on the data 1-1-1 as well. In addition, for example, when a program 5 described in FIG. 3 is executed to perform a process on data 2-4, the process with respect to data 2-5 is defined in the program 5, and thus the processing unit 101 can perform the process on the data 2-5 as well.

With the above-described configuration, it is not necessary to perform polling, an authentication process, and the like for each service in order to perform a process on data concerning different services, and thus a processing load of the reader/writer 200 can be reduced, and a processing speed can be improved.

In addition, the storage unit 102 can store programs in a state in which the programs are set for a system, a directory, or data as described above. With this configuration, programs can be set more flexibly than in a case in which programs are set only in units of IC cards or systems. Then, in a case in which a new program is set, for example, the new program can be set only for data concerning a necessary service, without applying the new program to the entire IC card. In addition, when a program is revised, only the individual program set for a service can be revised, without revising entire programs of the IC card. Therefore, the above-described configuration can make it possible to limit a risk that may be caused by installing a new program and revising a program with. Specifically, different authentication methods (authentication key encryption methods, etc.) can be set for each service and the authentication methods can be easily changed for each service.

Here, the program set for a system, a directory, or data can operate in various patterns. For example, the program can execute a process as a single program (without performing a process for the directory or data). For example, there are cases in which the program generates random numbers to be used in authentication, and the like. In addition, the program can also execute a process for the directory or data. For example, there are cases in which payment is performed using electronic money stored in the IC card at the time of product purchase and the like. Furthermore, the program can also be set to be automatically executed at the time of authentication with the directory or data, or in a case in which any process is performed on the directory or data. In a case in which a coupon has been issued for a certain product and a user purchases the product, for example, there is a case in which a coupon program is automatically executed and the selling price is discounted, or the like. By processing the program in various patterns as described above, a variety of services can be provided using the IC card 100.

Next, patterns of setting methods of associated data and programs will be described using FIG. 7. A is a pattern in which no program is set for associated data (association 3 in FIG. 3). B and C are patterns in which a program is set for partial data of associated data (association 2 and program 4 in FIG. 3). D is a pattern in which programs are set for all associated data (association 1 and programs 2 and 3 in FIG. 3).

With the above-described configuration, the processing unit 101 of the IC card can perform a process on associated data by executing the programs, and thus can perform the process on different services. Therefore, since it is not necessary to execute polling, an authentication process, and the programs for each service in order to perform a process on data concerning different services, a processing load imposed on the reader/writer 200 can be reduced, and a processing speed can be improved.

### <2. Second example>

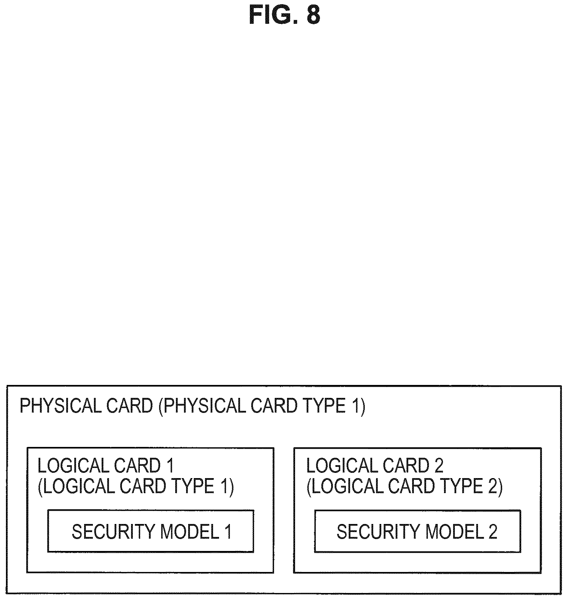

An example in which physical card serving as the IC card 100 has a plurality of logical cards will be described below with reference to FIG. 8 as a second example. FIG. 8 is an explanatory diagram illustrating a configuration of logical cards according to the present embodiment.

Here, the logical cards are IC cards virtually created in a physical card. In other words, resources (storage areas or the like) of one physical card are divided and allocated to the plurality of logical cards.

As illustrated in FIG. 8, the physical card of the present embodiment holds a type of physical card as identification information, and has a logical card 1 and a logical card 2. On the other hand, the logical card 1 holds a logical card type 1 as identification information and has a security model 1. The logical card 2 also holds a logical card type 2 and has a security model 2, similarly to the logical card 1.

Here, a security model refers to a hierarchical structure composed of a system, directories, data, or the like described in the "first example" and a program configuration. That is, in the second example, a hierarchical structure and a program configuration are provided for each logical card. With this configuration, services can be provided more flexibly in comparison to a case in which a physical card does not have a plurality of logical cards. For example, since a hierarchical structure of data or the like can be formed for each service, a data structure or a program suitable for each service provider can be set.

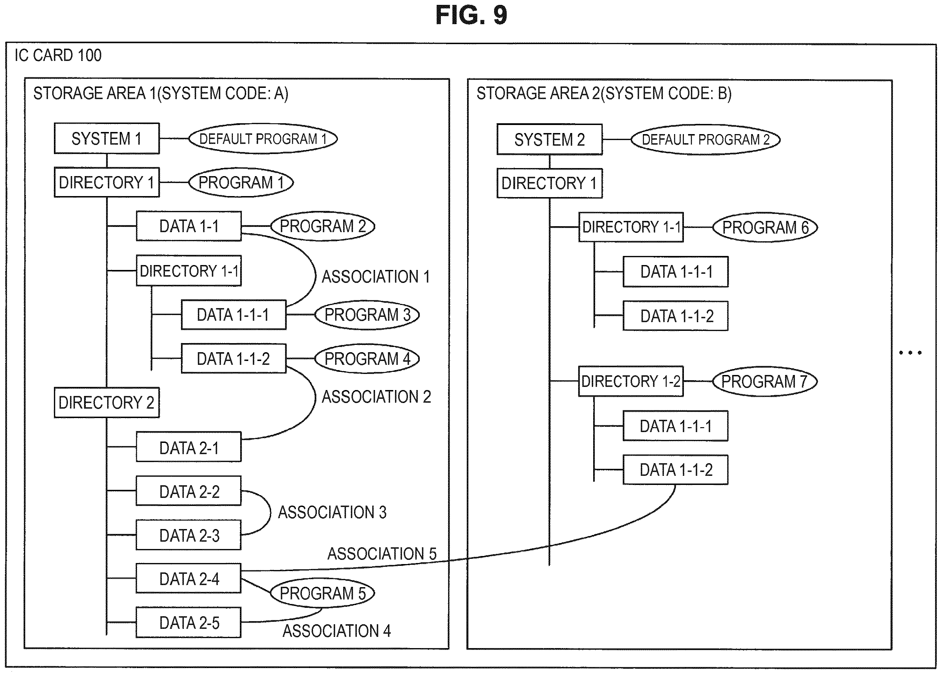

Next, hierarchical structures of data and the like stored in storage areas according to the present embodiment will be described with reference to FIG. 9 on the premise of the configuration described in FIG. 8. Here, it is assumed that the storage areas of FIG. 9 correspond to the logical cards of FIG. 8, and the system codes of FIG. 9 correspond to the logical card types of FIG. 8.

As illustrated in FIG. 9, the storage unit 102 of the IC card 100 has a plurality of storage areas. As in the first example, the hierarchical structures of systems, directories, data, or the like and programs are stored in each storage area.

In addition, as in the first example, the storage unit 102 can store data concerning each of a plurality of services in a state in which the data of different services is associated, and programs can be set for the systems, directories, or data.

In addition, in the second example, the processing unit 101 can associate data concerning each of the plurality of services of different storage areas with each other in each storage area (association 5). Specifically, the processing unit 101 can also make association of data of different storage areas through linking or a program. Although FIG. 9 illustrates a state in which data of two storage areas are associated with each other, data of three or more storage areas may be associated with each other. Furthermore, associated data of different storage areas may be further associated with other data of the same storage area (not illustrated).

With the above-described associations, the processing unit 101 of the IC card can perform a process on the associated data, and thus the processing unit can perform the process in the different storage areas. For example, when a process is to be performed on data 2-4 of the storage area 1, the processing unit 101 recognizes that the data 2-4 is associated with data 1-1-2 of the storage area 2 through association 5. In this case, the processing unit 101 can perform the process on the data 1-1-2 of the storage area 2 as well. In addition, for example, when a program 5 described in FIG. 9 is executed to perform a process on data 2-4, the process is defined for data 2-5 and the data 1-1-2 of the storage area 2 in the program 5, and thus the processing unit 101 can also perform the process on the data 2-5 and the data 1-1-2 of the storage area 2.

Therefore, it is not necessary to perform polling, an authentication process, and the like for each of different storage areas (services) in order to perform the process on data of the storage areas as in the first example, and thus a processing load imposed on the reader/writer 200 can be reduced, and a processing speed can be improved.

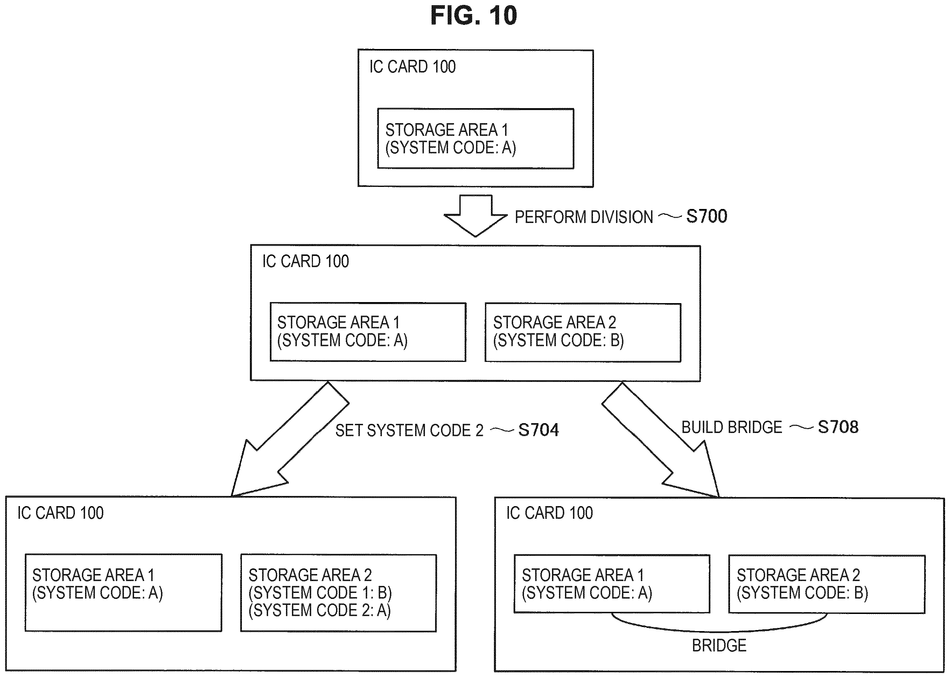

In the case in which data of different storage areas are associated with each other as described above, in order to perform a process in the different storage areas by performing the process on the associated data, it is necessary to activate the different storage areas. Thus, a method of activating the different storage areas will be subsequently described with reference to FIG. 10.

First, the IC card 100 is divided to create not only the storage area 1 but also the storage area 2 (S700). The storage area 1 holds a system code A as its identification information, and the storage area 2 holds a system code B as its identification information. Note that the identification information may be any form of identification information such as an ID as long as it is information capable of specifying the storage areas.

Next, a system code 2 that is a second system code is given to a storage area (S704). With this configuration, the storage area to which the system code 2 has been given not only can act as a storage area to which a system code 1 is given but also can act as a storage area to which the system code 2 is given. The system code A is given to the storage area 2 as the system code 2 in FIG. 10, for example, and thus in a case in which the communication unit 103 receives a polling request with the system code A designated thereto from the reader/writer 200, the processing unit 101 specifies and activates not only the storage area 1 but also the storage area 2.

Therefore, in a case in which the polling request with the system code A designated thereto is transmitted from the reader/writer 200 in S604 of FIG. 6, for example, not only the storage area 1 but also the storage area 2 can be activated.

In addition, different storage areas can be activated by associating the different storage areas by building a bridge the different storage areas, in addition to the method of giving the system code 2 (S708).

### <3. Hardware configuration example of information processing device>

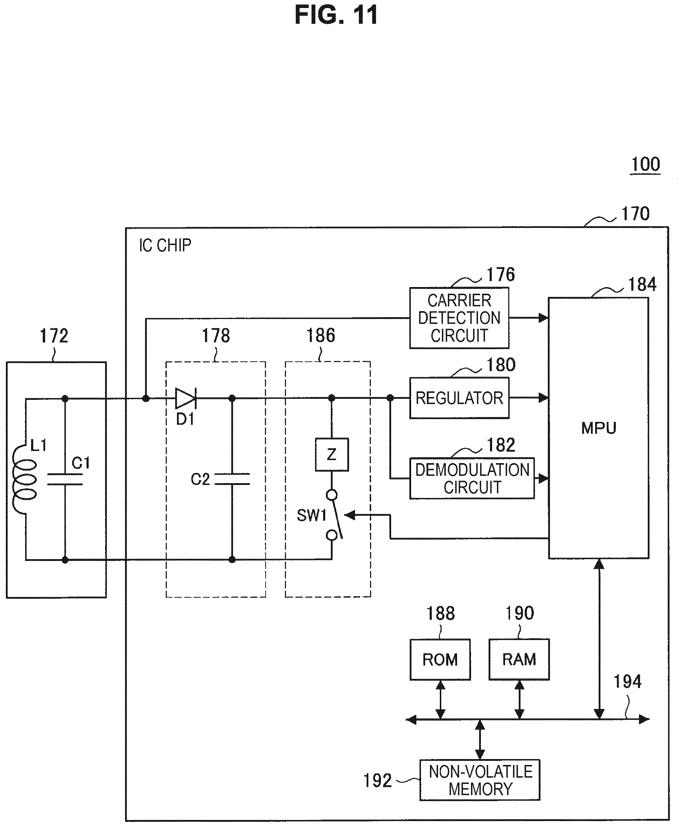

The information processing system according to the embodiment of the present disclosure has been described above. Information processing in the above-described information processing system is realized in cooperation of software and hardware of the IC card 100 which will be described below. A hardware configuration of the IC card 100 according to the present embodiment will be described below with reference to FIG. 11.

An antenna 172 is configured as, for example, a resonance circuit composed of a coil (inductor) L1 having predetermined inductance and a capacitor C1 having a predetermined electrostatic capacitance, and generates an induced voltage from electromagnetic induction in accordance with reception of carrier waves. In addition, the antenna 172 outputs a reception voltage obtained by resonating the induced voltage at a predetermined resonance frequency. Here, the resonance frequency of the antenna 172 is set to in accordance with the frequency of a carrier wave, for example, 13.56 [MHz], etc. With the above-described configuration, the antenna 172 receives carrier waves and transmits response signals through load modulation performed by a load modulation circuit 186 included in an IC chip 170.

The IC chip 170 has a carrier detection circuit 176, a detector circuit 178, a regulator 180, a demodulation circuit 182, an MPU 184, and the load modulation circuit 186. Note that, although not illustrated in FIG. 11, the IC chip 170 may further have, for example, a protection circuit (not illustrated) for preventing an overvoltage or an overcurrent from being applied to the MPU 184. Here, as a protection circuit (not illustrated), for example, a clamp circuit composed of a diode or the like is exemplified.

In addition, the IC chip 170 has, for example, a ROM 188, a RAM 190, and a non-volatile memory 192. The MPU 184, the ROM 188, the RAM 190, and the non-volatile memory 192 are connected to one another by, for example, a bus 194 serving as a data transmission path.

The ROM 188 stores programs to be used by the MPU 184 and control data such as arithmetic parameter. The RAM 190 temporarily stores programs to be executed by the MPU 184, arithmetic operation results, execution states, and the like.

The non-volatile memory 192 stores various kinds of data, for example, encryption key information to be used in mutual authentication in NFC, electronic values, various applications, and the like. Here, as the non-volatile memory 192, for example, an electrically erasable programmable read only memory (EEPROM), a flash memory, or the like is exemplified. The non-volatile memory 192 has, for example, tamper resistance, and corresponds to an example of a secure recording medium.

The carrier detection circuit 176 generates, for example, a rectangular detection signal on the basis of a received voltage transmitted from the antenna 172 and transmits the detection signal to the MPU 184. In addition, the MPU 184 uses the transmitted detection signal as, for example, a processing clock for data processing. Here, since the detection signal is based on the received voltage transmitted from the antenna 172, the detection signal is synchronized with the frequency of a carrier wave transmitted from an external device such as the reader/writer 200. Therefore, by having the carrier detection circuit 176, the IC chip 170 can perform processes to be performed between an external device such as the reader/writer 200 in synchronization with the external device.

The detector circuit 178 rectifies the received voltage output from the antenna 172. Here, the detector circuit 178 is composed of, for example, a diode D1 and a capacitor C2.

The regulator 180 smoothens the received voltage to be a constant voltage and outputs a drive voltage to the MPU 184. Here, the regulator 180 uses DC components of the received voltage as the drive voltage.

The demodulation circuit 182 demodulates a carrier wave signal on the basis of the received voltage and outputs data (e.g., a binary data signal of a high level and a low level) corresponding to the carrier wave signal included in a carrier wave. Here, the demodulation circuit 182 outputs AC components of the received voltage as data.

The MPU 184 is driven using the drive voltage output from the regulator 180 as a power source and processes the data demodulated by the demodulation circuit 182. Here, the MPU 184 is composed of, for example, one or two or more processors including an arithmetic circuit such as an MPU, various processing circuits, and the like.

In addition, the MPU 184 selectively generates a control signal for controlling load modulation related to a response to an external device such as the reader/writer 200 in accordance with a process result. Then, the MPU 184 selectively outputs the control signal to the load modulation circuit 186.

The load modulation circuit 186 has, for example, a load Z and a switch SW1, and performs load modulation by selectively connecting (activating) the load Z in accordance with the control signal transmitted from the MPU 184. Here, the load Z is constituted by, for example, a resistance having a predetermined resistance value. In addition, the switch SW1 is constituted by, for example, a p-channel-type metal oxide semiconductor field effect transistor (MOSFET) or an n-channel-type MOSFET.

The IC chip 170 can process the carrier wave signal received by the antenna 172 and cause the antenna 172 to transmit a response signal through the load modulation with the above-described configuration.

By having the configuration illustrated in FIG. 11, for example, the IC chip 170 and the antenna 172 perform communication based on NFC with an external device such as the reader/writer 200 using carrier waves having a predetermined frequency. Note that it is a matter of course that the configuration of the IC chip 170 and the antenna 172 according to the present embodiment is not limited to the example illustrated in FIG. 11.

Here, the functional element serving as the processing unit 101 of the IC card 100 illustrated in FIG. 2 is the MPU 184. The functional element serving as the storage unit 102 is the ROM 188, the RAM 190, or the non-volatile memory 192. The functional elements serving as the communication unit 103 are the antenna 172, the carrier detection circuit 176, the detector circuit 178, the regulator 180, the demodulation circuit 182, and the load modulation circuit 186. The encryption unit 104 and the decryption unit 105 serve as the MPU 184, like the processing unit 101.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Configurations of the IC card 100 can be provided, for example, outside the IC card. Specifically, the encryption unit 104 and the decryption unit 105 may be included in an external information processing device. In addition, the encryption unit 104 and the decryption unit 105 may not be provided.

In addition, all the functions of the IC card 100 may be embodied by, for example, the processing unit 101. That is, the processing unit 101 may realize the functions of the storage unit 102, the communication unit 103, the encryption unit 104, and the decryption unit 105. Of course, some of the functions of the IC card 100 may be embodied by the processing unit 101.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 100: IC card (information processing device)
- 101: processing unit
- 102: storage unit
- 103: communication unit
- 104: encryption unit
- 105: decryption unit
- 200: reader/writer
- 300: communication path

## Claims

1. An Integrated Circuit, IC, card type information processing device (100) comprising:
a processing unit (101) configured to process first and second data associated in a storage medium (102), the first data corresponding to a first service and the second data corresponding to a second service,
wherein, in a case in which the associated first and second data is stored in different storage areas of the storage medium (102), the processing unit (101) is configured to process the first and second data,
the different storage areas have different security models, and
the information processing device is arranged as a physical IC card that comprises a plurality of logical IC cards, the logical IC cards each having a security model,
wherein the different storage areas correspond to different logical IC cards, respectively, and
wherein the processing unit (101) processes the first and second data concerning services on a basis of an authentication method corresponding to each of the services.

2. The information processing device (100) according to claim 1,
wherein the processing unit (101) specifies the storage areas in which the associated first and second data concerning services is stored on a basis of identification information for identifying the storage areas.

3. The information processing device (100) according to claim 2,
wherein one or two or more pieces of the identification information are set in the storage areas, and
the processing unit (101) specifies the storage areas for which the one or two or more pieces of identification information, which match acquired identification information, are set.

4. The information processing device (100) according to claim 1,
wherein the processing unit (101) processes the first and second data concerning services on a basis of key information corresponding to each of the services or each piece of the first and second data.

5. The information processing device (100) according to claim 4,
wherein the key information corresponding to each of the services or each piece of the first and second data differs for each of the services or each piece of the first and second data.

6. The information processing device (100) according to claim 1,
wherein the authentication way corresponding to each of the services differs for each of the services.

7. The information processing device (100) according to claim 1,
wherein an access right to each piece of the first and second data concerning services is set for the associated data concerning services.

8. The information processing device (100) according to claim 1,
wherein, in a case in which the first and second data concerning services corresponding to each of a plurality of services is associated with each other by a program corresponding to the data concerning services, the processing unit (101) is configured to process the associated first and second data concerning services by executing the program.

9. The information processing device according to claim 1,
wherein the processing unit (101) is configured to associate the first and second data with each other by shared information corresponding to each piece of the first and second data concerning services.

10. The information processing device (100) according to claim 1,
wherein the information processing device (100) is a non-contact IC card or a communication device.

11. An information processing method that is executed by an Integrated Circuit, IC, card type information processing device (100), the information processing device being arranged as a physical IC card that comprises a plurality of logical IC cards, the logical IC cards each having a security model, the information processing method comprising:
processing first and second data associated in a storage medium (102), the first data corresponding to a first service and the second data corresponding to a second service, **characterised in that**:
processing, in a case in which the associated first and second data is stored in different storage areas of the storage medium (102), the first and second data,
wherein the different storage areas have different security models, and
wherein the different storage areas correspond to different logical IC cards, respectively,
wherein the first and second data concerning services are processed on a basis of an authentication method corresponding to each of the services.

## Patentansprüche

1. Informationsverarbeitungsvorrichtung (100) mit integrierter Schaltung, IC, vom Kartentyp, umfassend:
eine Verarbeitungseinheit (101), die dazu ausgelegt ist, erste und zweite Daten zu verarbeiten, die in einem Speichermedium (102) zugeordnet sind, wobei die ersten Daten einem ersten Dienst entsprechen und die zweiten Daten einem zweiten Dienst entsprechen,
wobei in einem Fall, in dem die zugeordneten ersten und zweiten Daten in unterschiedlichen Speicherbereichen des Speichermediums (102) gespeichert sind, die Verarbeitungseinheit (101) dazu ausgelegt ist, die ersten und zweiten Daten zu verarbeiten,
die unterschiedlichen Speicherbereiche unterschiedliche Sicherheitsmodelle haben, und
die Informationsverarbeitungsvorrichtung als physische IC-Karte angeordnet ist, die eine Mehrzahl von logischen IC-Karten umfasst, wobei die logischen IC-Karten jeweils ein Sicherheitsmodell aufweisen,
wobei die unterschiedlichen Speicherbereiche jeweils unterschiedlichen logischen IC-Karten entsprechen, und
wobei die Verarbeitungseinheit (101) die ersten und zweiten Daten bezüglich der Dienste auf der Grundlage eines Authentifizierungsverfahrens verarbeitet, das jedem der Dienste entspricht.

2. Informationsverarbeitungsvorrichtung (100) nach Anspruch 1,
wobei die Verarbeitungseinheit (101) auf der Grundlage von Identifikationsinformationen zum Identifizieren der Speicherbereiche die Speicherbereiche vorgibt, in denen die zugeordneten ersten und zweiten Daten bezüglich der Dienste gespeichert sind.

3. Informationsverarbeitungsvorrichtung (100) nach Anspruch 2,
wobei eine oder zwei oder mehr der Identifikationsinformationen in den Speicherbereichen eingestellt werden, und
die Verarbeitungseinheit (101) die Speicherbereiche vorgibt, für die die eine oder zwei oder mehr Identifikationsinformationen, die mit den erfassten Identifikationsinformationen übereinstimmen, eingestellt werden.

4. Informationsverarbeitungsvorrichtung (100) nach Anspruch 1,
wobei die Verarbeitungseinheit (101) die ersten und zweiten Daten bezüglich der Dienste auf der Grundlage von Schlüsselinformationen verarbeitet, die jedem der Dienste oder jedem Teil der ersten und zweiten Daten entsprechen.

5. Informationsverarbeitungsvorrichtung (100) nach Anspruch 4,
wobei die Schlüsselinformationen, die jedem der Dienste oder jedem Teil der ersten und zweiten Daten entsprechen, für jeden der Dienste oder jeden Teil der ersten und zweiten Daten unterschiedlich sind.

6. Informationsverarbeitungsvorrichtung (100) nach Anspruch 1,
wobei die Art der Authentifizierung, die jedem der Dienste entspricht, für jeden der Dienste unterschiedlich ist.

7. Informationsverarbeitungsvorrichtung (100) nach Anspruch 1,
wobei für die zugeordneten Daten bezüglich der Dienste ein Zugriffsrecht auf jeden Teil der ersten und zweiten Daten bezüglich der Dienste eingestellt wird.

8. Informationsverarbeitungsvorrichtung (100) nach Anspruch 1,
wobei in einem Fall, in dem die ersten und zweiten Daten bezüglich der Dienste, die jedem von einer Mehrzahl von Diensten entsprechen, durch ein Programm, das den Daten bezüglich der Dienste entspricht, einander zugeordnet sind, die Verarbeitungseinheit (101) dazu ausgelegt ist, die zugeordneten ersten und zweiten Daten bezüglich der Dienste durch Ausführen des Programms zu verarbeiten.

9. Informationsverarbeitungsvorrichtung nach Anspruch 1, wobei die Verarbeitungseinheit (101) dazu ausgelegt ist, die ersten und zweiten Daten durch gemeinsame genutzte Informationen, die jedem Teil der ersten und zweiten Daten bezüglich der Dienste entsprechen, einander zuzuordnen.

10. Informationsverarbeitungsvorrichtung (100) nach Anspruch 1,
wobei die Informationsverarbeitungsvorrichtung (100) eine berührungslose IC-Karte oder eine Kommunikationsvorrichtung ist.

11. Informationsverarbeitungsverfahren, das von einer Informationsverarbeitungsvorrichtung (100) mit integrierter Schaltung, IC, vom Kartentyp, ausgeführt wird, wobei die Informationsverarbeitungsvorrichtung als eine physische IC-Karte angeordnet ist, die eine Mehrzahl von logischen IC-Karten umfasst, wobei die logischen IC-Karten jeweils ein Sicherheitsmodell aufweisen, wobei das Informationsverarbeitungsverfahren umfasst:
Verarbeiten von ersten und zweiten Daten, die in einem Speichermedium (102) zugeordnet sind, wobei die ersten Daten einem ersten Dienst entsprechen und die zweiten Daten einem zweiten Dienst entsprechen, **dadurch gekennzeichnet, dass**:
Verarbeiten der ersten und zweiten Daten in einem Fall, in dem die zugeordneten ersten und zweiten Daten in unterschiedlichen Speicherbereichen des Speichermediums (102) gespeichert sind,
wobei die unterschiedlichen Speicherbereiche unterschiedliche Sicherheitsmodelle aufweisen, und
wobei die unterschiedlichen Speicherbereiche jeweils unterschiedlichen logischen IC-Karten entsprechen,
wobei die ersten und zweiten Daten bezüglich der Dienste auf der Grundlage eines Authentifizierungsverfahrens verarbeitet werden, das jedem der Dienste entspricht.

## Revendications

1. Dispositif de traitement d'informations de type carte à puce, IC, (100) comprenant :
une unité de traitement (101) configurée pour traiter des premières et secondes données associées dans un support de stockage (102), les premières données correspondant à un premier service et les secondes données correspondant à un second service,
où, dans un cas où les premières et les secondes données associées sont stockées dans différentes zones de stockage du support de stockage (102), l'unité de traitement (101) est configurée pour traiter les premières et les secondes données,
les différentes zones de stockage ont des modèles de sécurité différents, et
le dispositif de traitement d'informations est agencé comme une carte à puce physique qui comprend une pluralité de cartes à puce logiques, les cartes à puce logiques ayant chacune un modèle de sécurité,
où les différentes zones de stockage correspondent à différentes cartes à puce logiques, respectivement, et
où l'unité de traitement (101) traite les premières et les secondes données concernant des services sur la base d'un procédé d'authentification correspondant à chacun des services.

2. Dispositif de traitement d'informations (100) selon la revendication 1,
dans lequel l'unité de traitement (101) spécifie les zones de stockage dans lesquelles les premières et secondes données concernant des services associés sont stockées sur la base d'informations d'identification pour identifier les zones de stockage.

3. Dispositif de traitement d'informations (100) selon la revendication 2,
dans lequel un ou deux, ou davantage, éléments des informations d'identification sont définis dans les zones de stockage, et
l'unité de traitement (101) spécifie les zones de stockage pour lesquelles les un ou deux, ou davantage, éléments d'informations d'identification, qui correspondent aux informations d'identification acquises, sont définis.

4. Dispositif de traitement d'informations (100) selon la revendication 1,
dans lequel l'unité de traitement (101) traite les premières et secondes données concernant des services sur la base d'informations clés correspondant à chacun des services ou à chaque élément des premières et secondes données.

5. Dispositif de traitement d'informations (100) selon la revendication 4,
dans lequel les informations clés correspondant à chacun des services ou à chaque élément des premières et secondes données diffèrent pour chacun des services ou chaque élément des premières et secondes données.

6. Dispositif de traitement d'informations (100) selon la revendication 1,
dans lequel le moyen d'authentification correspondant à chacun des services diffère pour chacun des services.

7. Dispositif de traitement d'informations (100) selon la revendication 1,
dans lequel un droit d'accès à chaque élément des premières et des secondes données concernant des services est défini pour les données associées concernant des services.

8. Dispositif de traitement d'informations (100) selon la revendication 1,
dans lequel, dans le cas où les premières et secondes données concernant des services correspondant à chacun d'une pluralité de services sont associées les unes aux autres par un programme correspondant aux données concernant des services, l'unité de traitement (101) est configurée pour traiter les premières et les secondes données associées concernant des services en exécutant le programme.

9. Dispositif de traitement d'informations selon la revendication 1,
dans lequel l'unité de traitement (101) est configurée pour associer les premières et les secondes données entre elles par des informations partagées correspondant à chaque élément des premières et des secondes données concernant des services.

10. Dispositif de traitement d'informations (100) selon la revendication 1,
dans lequel le dispositif de traitement d'informations (100) est une carte à puce sans contact ou un dispositif de communication.

11. Procédé de traitement d'informations qui est exécuté par un dispositif de traitement d'informations (100) de type carte à puce, IC, le dispositif de traitement d'informations étant agencé comme une carte à puce physique qui comprend une pluralité de cartes à puce logiques, les cartes à puce logiques ayant chacune un modèle de sécurité, le procédé de traitement d'informations comprenant :
le traitement des premières et des secondes données associées dans un support de stockage (102), les premières données correspondant à un premier service et les secondes données correspondant à un second service, **caractérisé par** :
le traitement, dans le cas dans lequel les premières et les secondes données associées sont stockées dans des zones de stockage différentes du support de stockage (102), des premières et des secondes données,
où les différentes zones de stockage ont des modèles de sécurité différents, et
où les différentes zones de stockage correspondent à différentes cartes à puce logiques, respectivement,
où les premières et les secondes données concernant des services sont traitées sur la base d'un procédé d'authentification correspondant à chacun des services.
